# EUROPÄISCHE PATENTANMELDUNG

(11) **EP 1 170 174 A2**
(43) Veröffentlichungstag der Anmeldung: **09.01.2002**
(21) Anmeldenummer: 01116002.5
(22) Anmeldetag: 30.06.2001
(51) Int. Cl.: B60R 1/072

(54) **Aufschnappen des Spiegelantriebs**

(30) Priorität: 07.07.2000 DE 10033088
(71) Anmelder: Bühler Motor GmbH, 90459 Nürnberg (DE)
(72) Erfinder: Guttenberger, Richard, 91171 Greding (DE)

(57) **Zusammenfassung**

Verstellbarer Rückspiegel für ein Fahrzeug, insbesondere Kraftfahrzeug, Luftfahrzeug oder Wasserfahrzeug, mit einem mit einem Spiegelträger (1) drehfest verbundenen Antriebsgehäuse (2), wobei die Verbindung zwischen dem Spiegelträger (1) und dem Antriebsgehäuse (2) eine Schnappverbindung ist.

## Beschreibung

Die vorliegende Erfindung betrifft einen verstellbaren Rückspiegel für ein Fahrzeug nach dem Oberbegriff des Patentanspruchs 1.

Derartige verstellbare Rückspiegel sind insbesondere im Kraftfahrzeugbereich vielfach im Einsatz, wobei ein Spiegelträger mittels einer Vorrichtung zur Montage an einem Kraftfahrzeug an dieses drehfest verbunden ist und seinerseits ein Antriebsgehäuse trägt. Das Antriebsgehäuse umfaßt zumindest eine Antriebseinheit, in der Regel einen Elektromotor, und gegebenenfalls ein oder mehrere Getriebe.

Bei bisher bekannten verstellbaren Rückspiegeln wird das Antriebsgehäuse mit Hilfe von selbstfurchenden Schrauben an dem Spiegelträger befestigt.

Der für den Betrieb der zumindest einen elektrischen Antriebseinheit in dem Antriebsgehäuse erforderliche Anschluß an das Bordnetz erfolgt in aller Regel entweder über einzelne Kabel oder über eine Stekkerverbindung, wobei mindestens je ein Anschluß an dem Spiegelträger und an dem Antriebsgehäuse vorgesehen und miteinander zu verbinden sind.

Diese bisherige Befestigungsmöglichkeit für ein Antriebsgehäuse an einem Spiegelträger mittels selbstfurchender, bzw. selbstschneidender Schrauben und die anschließend notwendige Herstellung einer elektrischen Verbindung zwischen dem Spiegelträger und dem Antriebsgehäuse, die in einem weiteren Arbeitsgang erstellt wurde, hat sich jedoch als äußerst arbeits- und zeitaufwendig erwiesen. Darüber hinaus ist eine Handhabung von Kleinteilen, wie selbstfurchenden Schrauben, sowie Zwischenstücken zur elektrischen Kontaktierung notwendig, was eine entsprechende Lagerung und Logistik und ein präzises und somit zeitaufwendiges Arbeiten erforderte.

Demzufolge liegt der vorliegenden Erfindung die Aufgabe zugrunde, den bekannten verstellbaren Rückspiegel dahingehend weiterzubilden, daß eine einfache und kostengünstige Montage des Antriebsgehäuses an dem Spiegelträger ermöglicht wird, wobei insbesondere gleichzeitig eine elektrische Verbindung zwischen dem Spiegelträger und dem Antriebsgehäuse geschaffen wird.

Diese Aufgabe wird durch eine Vorrichtung nach Patentanspruch 1 gelöst.

Besonders vorteilhaft wird die Aufgabe durch einen verstellbaren Rückspiegel gelöst, bei welchem elektrische Kontakte an dem Spiegelträger und dem Antriebsgehäuse so ausgebildet sind, daß während eines Einschnappvorganges zur Verbindung des Antriebsgehäuses an dem Spiegelträger, gleichzeitig eine elektrische Verbindung zwischen dem Spiegelträger und dem Antriebsgehäuse hergestellt wird.

In einer ersten Ausgestaltung sind auf oder im Spiegelträger Leiterbahnen integriert, die Kontaktstellen zur Kontaktierung der elektrischen Kontakte des Antriebsgehäuses aufweisen. Diese Art der Kontaktierung stellt eine besonders einfache, fertigungstechnisch sinnvolle und zuverlässige Art der Kontaktierung dar. Gerade wenn der Spiegelträger auch für andere elektrische Komponenten, wie beispielsweise Seitenblinker, Sensoren, GPS-Antenne, etc., als Zuleitung und ggf. Montagefläche dient, ist das Integrieren von Leiterbahnen sinnvoll. Integrierte Leiterbahnen sind darüber hinaus besser vor äußeren Einflüssen wie Feuchtigkeit, etc., geschützt, so daß das System insgesamt zuverlässiger wird.

In einer anderen alternativen Ausgestaltung sind die elektrischen Kontakte jeweils in einem Steckeranschluß und in einer korrespondierenden Steckerbuchse aufgenommen, wobei die Steckerbuchse am Antriebsgehäuse oder am Spiegelträger und der Steckeranschluß korrespondierend am Spiegelträger oder Antriebsgehäuse angeordnet sind.

In beiden alternativen Ausgestaltungen können elektrische Komponenten am Antriebsgehäuse oder am Spiegelglasträger auch mittels Bustechnologie angesteuert und betrieben werden, was den Aufwand hinsichtlich der Zahl der Leitungsstränge sowie den Kontaktierungsaufwand erheblich reduziert.

In einer leicht herzustellenden und zu handhabenden Ausführung sind an dem Antriebsgehäuse Schnappelemente und eine Steckerbuchse derart vorgesehen, daß bei einem Einrasten der Schnappsegmente in einer Gegenkontur, welche an dem Spiegelträger angebracht ist, gleichzeitig ein entsprechend an der Gegenkontur angebrachter Stecker in die Steckerbuchse eingreift, so daß mit dem Vorgang des mechanischen Verbindens durch Ein- bzw. Aufschnappen zugleich eine elektrische Verbindung zwischen dem Spiegelträger und dem daran befestigten Antriebsgehäuse hergestellt wird.

Selbstverständlich ist es ebenso möglich, die Schnappelemente und/oder die Steckerbuchse an dem Spiegelträger anzubringen, so daß die Gegenkontur an dem Antriebsgehäuse angeordnet bzw, diesem zugeordnet ist.

Die elektrischen Kontakte, insbesondere Steckeranschluß und Steckerbuchse können auch so ausgerichtet sein, daß die Einsteckrichtung des Steckers bzw. der Kontaktierung gegenüber der Montagerichtung des Antriebsgehäuses am Spiegelträger um insbesondere 90° verdreht ist, wobei dann die Kontaktierung in einem vom Aufschnappvorgang separaten Arbeitsschritt zu erfolgen hat.

Gemäß einem weiteren Aspekt erfolgt die Befestigung des Antriebsgehäuses an dem Spiegelträger auch mittels einer Klebeverbindung, die alleine oder in Kombination mit einer Schnappbefestigung vorgesehen ist.

Gemäß einem vorteilhaften Aspekt der Erfindung ist die Schnappverbindung des Antriebsgehäuses an dem Spiegelträger lösbar ausgebildet, so daß eine Reparatur des Antriebsgehäuses und/oder des Spiegelträgers in einfacher Weise möglich ist, ohne daß eines der beiden Teile als behindernd empfunden wird oder eine Reparatur völlig ausschließt.

Die Lösbarkeit einer Schnappbefestigung ist dadurch gewährleistet, daß der Spiegelträger entweder von hinten zugänglich ist, so daß Rasten der Schnappelemente bzw. -segmente aus ihrer fixierenden Position gedrückt werden können, oder die Rasten der Schnappsegmente werden mit Hilfe eines Spezialwerkzeuges gelöst, das bei Unzugänglichkeit des hinteren Teils des Spiegelträgers von vorne eingeführt wird.

Gemäß einem weiteren Aspekt der Erfindung ist die Verbindung zwischen dem Spiegelträger und dem Antriebsgehäuse verdrehsicher und/oder verschiebesicher ausgebildet. Dies ist insbesondere deshalb vorteilhaft, da auf sowohl das Antriebsgehäuse als auch auf den Spiegelträger bei Inbetriebnahme der in dem Antriebsgehäuse angeordneten zumindest einen Antriebseinheit ein Torsionsmoment auf den Spiegelträger und/oder das Antriebsgehäuse wirkt, so daß ein Gegeneinander-Verdrehen des Spiegelträgers und des Antriebsgehäuses bzw. ein Gegeneinander-Verschieben der beiden Teile möglich und wahrscheinlich wäre, wenn die Verbindung zwischen dem Spiegelträger und dem Antriebsgehäuse nicht verdrehsicher und/oder verschiebesicher ausgebildet ist.

Es ist deshalb die Befestigung des Antriebsgehäuses an dem Spiegelträger mittels einer Schnappbefestigung in Kombination mit einer Steckbefestigung vorteilhaft, da auf diese Weise ein Verdrehen und/oder Verschieben der beiden Teile gegeneinander sicher unterbunden ist. Dies wird in einer vorteilhaften Variante in Kombination mit der elektrischen Verbindung mittels Stecker und Buchse realisiert.

Gemäß einem weiteren Aspekt sind Mittel zur Herstellung einer elektrischen Verbindung zwischen dem Spiegelträger und dem Antriebsgehäuse, speziell eine Stecker-Buchse-Anordnung, an und/oder integral mit der ersten und/oder der zweiten Kontur ausgebildet. Beispielsweise ist ein Stecker an dem Spiegelträger oder an dem Antriebsgehäuse und die korrespondierende Steckerbuchse an dem jeweils anderen Teil angeformt.

In einer weiteren Variante der Erfindung ist es möglich, die Kontakte in den jeweiligen Befestigungskonturen und/oder―flächen anzubringen, so daß ein separater Stecker nebst Steckerbuchse nicht notwendig ist. Des weiteren ist die Realisierung der Ansteuerung und zum Betrieb der Antriebseinheit notwendigen elektrischen Verbindung dadurch möglich, daß die Schnapp- oder Schnapp- und Steck- oder Schnapp- und Klebeverbindung zwischen Antriebsgehäuse und Spiegelträger elektrisch leitende Kontaktflächen aufweist.

Die Anzahl der für die Befestigung des Antriebsgehäuses an dem Spiegelträger notwendigen Konturelementen ist hierbei mindestens so groß, daß für jede notwendige elektrische Kontaktierung, respektive elektrisch notwendige Verbindung, ein Konturelement zur Verfügung steht. Selbstverständlich kann die erfindungsgemäße Vorrichtung auch mehrere für die elektrische Verbindung von Spiegelträger und Antriebsgehäuse nicht benötigte Konturen aufweisen, oder es können zusätzliche separate elektrische Steckverbindungen vorgesehen sein, die bei einer erfindungsgemäßen Verbindung von Antriebsgehäuse und Spiegelträger aneinander greifen.

Gemäß einem weiteren und besonders vorteilhaften Aspekt der Erfindung ist der Spiegelträger einstückig mit einem Element zur Montage an dem Fahrzeug ausgebildet. Es erweist sich bei dieser Ausführungsform insbesondere als vorteilhaft, daß das Antriebsgehäuse direkt und ohne ein weiteres Zwischenstück in Form einer Vorrichtung zur Montage an dem Fahrzeug angebracht werden kann.

Somit weist der Spiegelträger einen Spiegelkopf auf, der an einem an dem Fahrzeug angebrachten Spiegelfuß angebracht wird, so daß die Anzahl der benötigten Teile von anfänglich einigen selbstfurchenden Schrauben und zumindest einem Zwischenstück zur elektrischen Kontaktierung sowie des Spiegelträgers und des Antriebsgehäuses auf nunmehr zwei Bauteile, nämlich den einstückig mit einer Vorrichtung zur Montage an einem Fahrzeug ausgebildeten Spiegelträger und das Antriebsgehäuse, reduziert ist, wodurch nicht nur eine schnellere Montage, sondern auch eine Kostenreduzierung in der Fertigung erzielt ist.

Alternativ ist es selbstverständlich möglich, den Spiegelträger separat an einer Vorrichtung zur Montage an einem Fahrzeug anzubringen, wodurch beispielsweise der Vorteil erzielt werden kann, daß der Spiegelträger und das Antriebsgehäuse universell auf verschiedenen Vorrichtungen zur Montage an einem Fahrzeug anbringbar sind, ohne daß Rücksicht auf eine Abstimmung zwischen der Vorrichtung zur Montage und dem Antriebsgehäuse sowie Spiegelträger genommen werden muß.

Gemäß einem weiteren Aspekt der Erfindung weist der Rückspiegel eine Federeinrichtung zur Sicherung der Schnappbefestigung des Antriebsgehäuses an dem Spiegelträger auf. Dies erweist sich insbesondere bei Rückspiegeln als äußerst vorteilhaft, die starken Erschütterungen und/oder ruckartigen Bewegungen ausgesetzt sind. Eine derartige Federeinrichtung kann beispielsweise als Federring aus Metall oder Kunststoff, als Klammer aus den entsprechenden Materialien oder auch als straffe Gummimanschette ausgebildet sein, welche das Antriebsgehäuse und den Spiegelträger in geeigneter Weise umgreift und aneinander preßt.

Gemäß einer besonders bevorzugten Ausführungsform der Erfindung ist es somit möglich, daß das Antriebsgehäuse vor der Verbindung mit dem Spiegelträger vormontiert ist. Ein Spiegelglasträger, eine Kraftübertragungseinrichtung zwischen dem Antriebsgehäuse und dem Spiegelglasträger und ein Spiegelglas sind fertig montiert und in diesem Zustand durch ein einfaches Annähern des fertig vormontierten Antriebsgehäuses an den Spiegelträger verbindbar. Somit ist günstigerweise eine Verbindung des vormontierten Antriebsgehäuses an den Spiegelträger in einem einzigen Arbeitsschritt möglich.

Ausnehmungen, die an dem Antriebsgehäuse vorgesehen sind und erfindungsgemäß als Verdrehsicherung dienen, können alternativ auch als Anschraubausnehmungen für eine alternative Befestigung des Antriebsgehäuses an dem Spiegelträger (Anschrauben) dienen.

Vorteile und Zweckmäßigkeiten der Erfindung ergeben sich im übrigen aus den Unteransprüchen sowie eines Ausführungsbeispiels, das anhand der Abbildungen näher erläutert wird. Gleiche oder gleichwirkende Teile sind hierbei mit den gleichen Bezugszeichen bezeichnet.

Hierbei zeigen:
- Fig. 1: einen Spiegelträger, einen Federring und ein Antriebsgehäuse gemäß einer Ausführungsform der Erfindung,
- Fig. 2: die Elemente gemäß Fig. 1, wobei ein Spiegelglasträger an dem Antriebsgehäuse montiert ist,
- Fig. 3: Segmente gemäß Fig. 1 in zusammengebautem Zustand;
- Fig. 4: Segmente gemäß Fig. 2 in zusammengebautem Zustand.

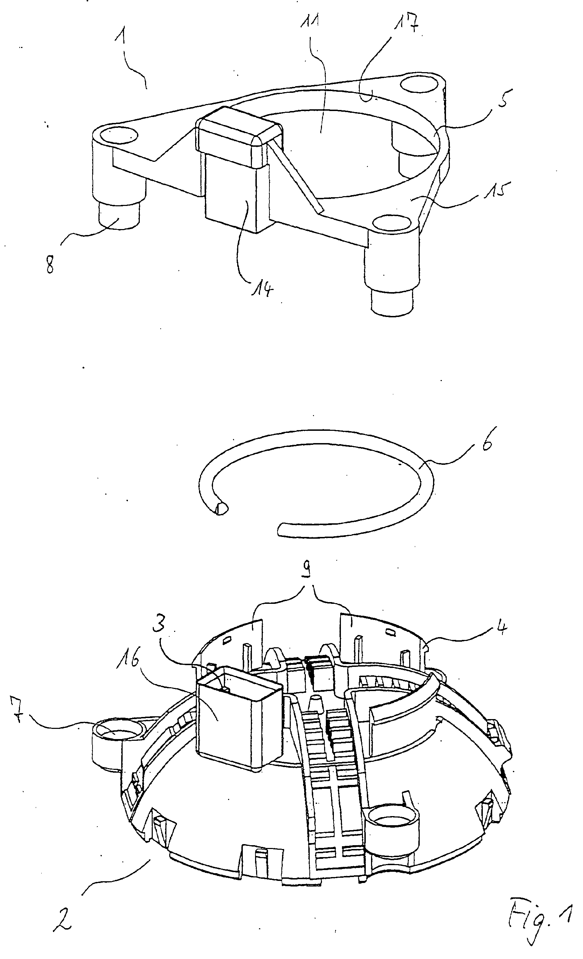

Fig. 1 zeigt einen Spiegelträger 1 sowie ein Antriebsgehäuse 2 eines KfZ-Rück-spiegels, wobei das Antriebsgehäuse geeignet ist, mittels einer Schnappbefestigung in den Spiegelträger einzurasten und an diesem befestigt sowie mit einem Federring 6 fixiert zu werden.

Der Spiegelträger 1 weist, wie in Fig. 1 dargestellt, eine im wesentlichen dreieckige Grundplatte 15 mit nach unten ragenden zylindrischen Füßen 8, die für eine Steckverbindung mit an dem Antriebsgehäuse 2 angeordneten Ausnehmungen 7 vorgesehen sind, sowie einem in die gleiche Richtung weisenden Stecker 14 auf. Die Grundplatte 15 weist eine kreisförmige Öffnung 11 auf, in die Schnappsegmente 9, welche auf dem der Spiegelträger 1 zugewandten Teil des Antriebsgehäuses 2 befestigt sind, bei Einschieben in die Öffnung 11 des Spiegelträgers 1 einrasten.

Eine Steckerbuchse 16 mit elektrischen Kontakten 3 ist an dem Antriebsgehäuse 2 ausgebildet und weist in die gleiche Richtung wie die Schnappsegmente 9, so daß bei einem Einrasten der Schnappsegmente 9 hinter den Rand 17 der Öffnung 11 des Spiegelträgers 1 gleichzeitig eine elektrische Kontaktierung der in dem Steckeranschluß 14 vorhandenen (verdeckten) elektrischen Anschlüsse mit den in der Steckerbuchse 16 korrespondierenden elektrischen Anschlüssen sichergestellt ist. Zugleich greifen die Füße 8 in die Ausnehmungen 7 ein. Beides zusammen schafft eine dreh- und verschiebefeste Verbindung zwischen dem Spiegelträger 1 und dem Antriebsgehäuse 2.

In einer anderen - nicht dargestellten Ausführungsform - sind auf oder im Spiegelträger 1 Leiterbahnen integriert, die Kontaktstellen zur Kontaktierung der elektrischen Kontakte 3 des Antriebsgehäuses 2 aufweisen.

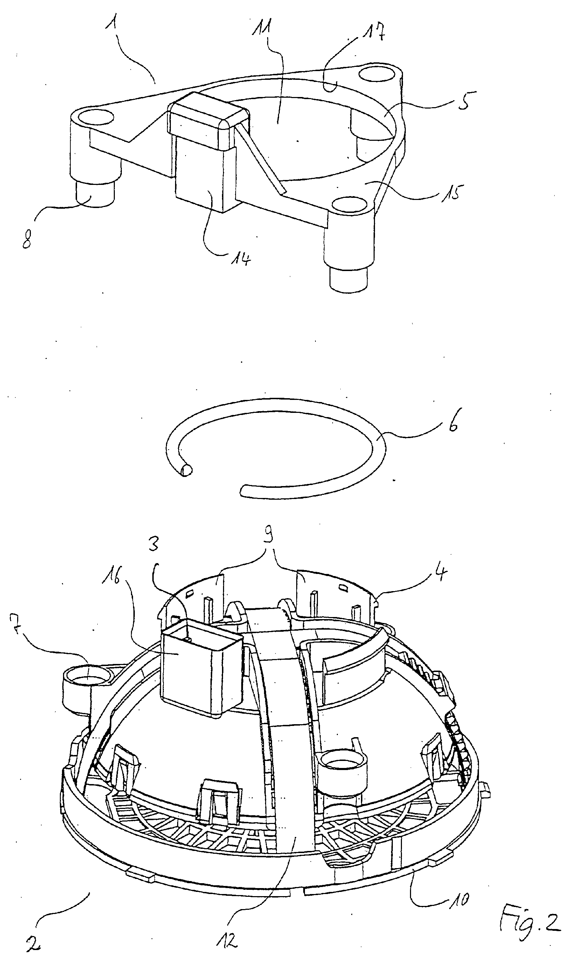

Fig. 2 zeigt den Spiegelträger 1 in einem Zustand, in dem an ihm ein Spiegelglasträger 10 angebracht ist, auf welchem eine Spiegelplatte befestigt werden kann.

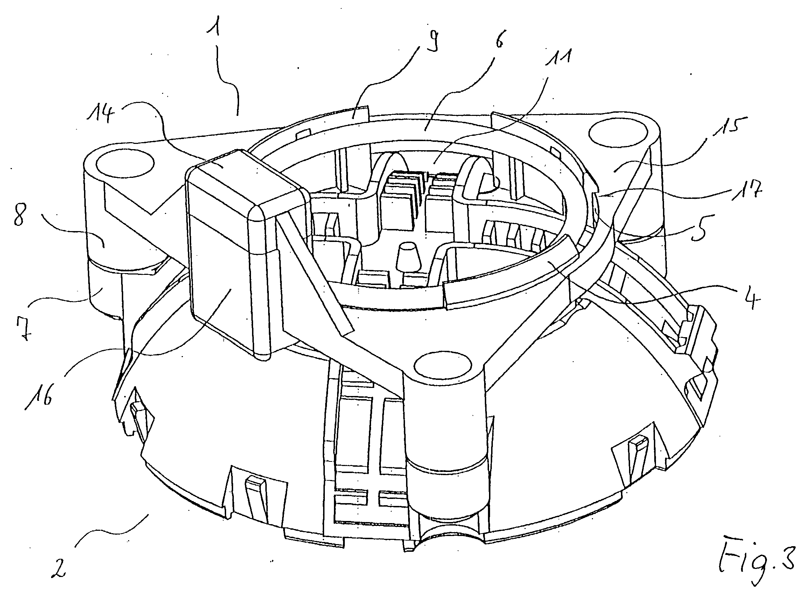

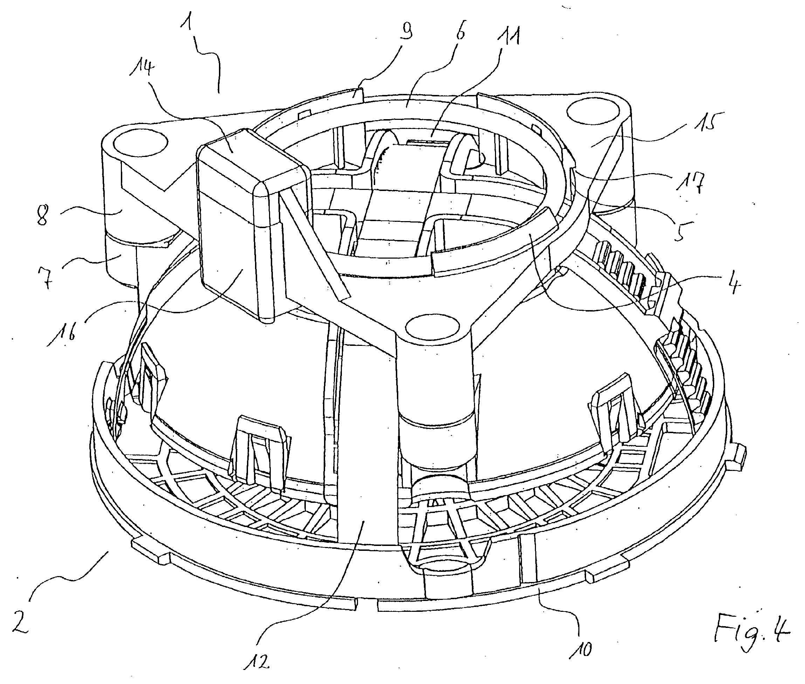

In Fig. 3 ist der Montagezustand des Rückspiegels gezeigt, in dem die Schnappsegmente 9 in Eingriff mit dem Rand 17 der Öffnung 11 des Spiegelträgers 1 gebracht und mit dem metallischen Federring 6 so fixiert sind, daß ein Ausschnappen oder Herunterklappen von der Platte 15 des Spiegelträgers 1 verhindert ist. Fig. 4 zeigt die Anordnung mit angefügtem Spiegelglasträger.

Das Antriebsgehäuse 2 kann von dem Spiegelträger 1 dadurch gelöst werden, daß der Federring 6 durch Fingerdruck entfernt wird und die Schnappsegmente 9 aus der Öffnung 11 gelöst, d. h. durch leichtes Zusammendrücken ausgerastet, werden.

Aus obigem geht hervor, daß die Erfindung nicht nur einen verstellbaren Rückspiegel mit einem mittels einer Schnapp- und ggf. einer zusätzlichen Steck- oder Klebeverbindung befestigten Antriebsgehäuse und einem Spiegelträger 1 betrifft, sondern auch ein Montageverfahren zur Verbindung des Antriebsgehäuses mit dem Spiegelträger.

An dieser Stelle sei auch darauf hingewiesen, daß alle oben beschriebenen Teile für sich alleine gesehen und in jeder Kombination, insbesondere die in den Zeichnungen dargestellten Details, als erfindungswesentlich beansprucht werden, Abänderungen hiervon sind dem Fachmann geläufig.

### Bezugszeichenliste

- 1: Spiegelträger
- 2: Antriebsgehäuse
- 3: elektrische Kontakte
- 4: erste Kontur
- 5: zweite Kontur
- 6: Federring
- 7: Ausnehmungen (Anschraubausnehmungen)
- 8: zylindrischer Fuß
- 9: Schnappsegment
- 10: Spiegelglasträger
- 11: Durchtrittsöffnung
- 12: Kraftübertragungseinrichtung
- 14: Steckeranschluß
- 15: Platte
- 16: Steckerbuchse
- 17: Rand

## Patentansprüche

1. Verstellbarer Rückspiegel für ein Fahrzeug, insbesondere Kraftfahrzeug, Luftfahrzeug oder Wasserfahrzeug, mit einem mit einem Spiegelträger (1) drehfest verbundenen Antriebsgehäuse (2),
**dadurch gekennzeichnet, daß**
die Verbindung zwischen dem Spiegelträger (1) und dem Antriebsgehäuse (2) eine Schnappverbindung ist.

2. Rückspiegel nach Anspruch 1,
**dadurch gekennzeichnet, daß**
der Spiegelträger (1) und das Antriebsgehäuse (2) jeweils elektrische Kontakte (3) aufweisen, die so ausgebildet sind, daß während eines Einschnappvorganges gleichzeitig eine elektrische Verbindung zwischen dem Spiegelträger (1) und dem Antriebsgehäuse (2) hergestellt wird.

3. Rückspiegel nach Anspruch 2,
**dadurch gekennzeichnet, daß**
auf oder im Spiegelträger (1) Leiterbahnen integriert sind, die Kontaktstellen zur Kontaktierung der elektrischen Kontakte (3) des Antriebhauses (2) aufweisen.

4. Rückspiegel nach Anspruch 2,
**dadurch gekennzeichnet, daß**
die elektrischen Kontakte (3) jeweils in einem Steckeranschluß (14) und einer korrespondierenden Steckerbuchse (16) aufgenommen sind, wobei die Steckerbuchse (16) am Antriebsgehäuse (2) oder am Spiegelträger (1) und der Steckeranschluß (14) korrespondierend am Spiegelträger (1) oder Antriebsgehäuse (2) angeordnet sind.

5. Rückspiegel nach einem der vorhergehenden Ansprüche,
**dadurch gekennzeichnet, daß**
die Schnappverbindung eine erste Kontur (4) und eine zweite Kontur (5) aufweist, die zu der ersten Kontur komplementär ist.

6. Rückspiegel nach einem der vorhergehenden Ansprüche,
**dadurch gekennzeichnet, daß**
die Schnappverbindung lösbar ist.

7. Rückspiegel nach einem der vorhergehenden Ansprüche,
**dadurch gekennzeichnet, daß**
die Schnappverbindung verschiebesicher ausgebildet ist.

8. Rückspiegel nach Anspruch 2 und einem der Ansprüche 3 bis 7,
**dadurch gekennzeichnet, daß**
eine Stecker-/Buchsen-Einrichtung (3a, 3b) zur Herstellung der elektrischen Verbindung und zur Verdrehsicherung zwischen dem Spiegelträger (1) und dem Antriebsgehäuse (2) an und/oder integral mit der ersten (4) bzw. zweiten Kontur (5) ausgebildet ist.

9. Rückspiegel nach einem der vorhergehenden Ansprüche,
**dadurch gekennzeichnet, daß**
eine Federeinrichtung (6) zur Sicherung der Schnappverbindung vorgesehen ist.

10. Rückspiegel nach einem der vorhergehenden Ansprüche,
**dadurch gekennzeichnet, daß**
der Spiegelträger (1) einstückig mit einem Halter zur Montage an dem Fahrzeug ausgebildet ist.

11. Rückspiegel nach einem der vorhergehenden Ansprüche,
**dadurch gekennzeichnet, daß**
das Antriebsgehäuse (2) Ausnehmungen (7) aufweist, in welche zylindrische Füße (8) des Spiegelträgers (1) eingreifen.

12. Rückspiegel nach Anspruch 11,
**dadurch gekennzeichnet, daß**
eine Verdrehsicherung des Antriebsgehäuses (2) in Bezug auf den Spiegelträger (1) durch den Eingriff der zylindrischen Füße (8) des Spiegelträgers (1) in die Ausnehmungen (7) des Antriebsgehäuses (2) bewirkt wird.

13. Rückspiegel nach einem der vorhergehenden Ansprüche,
**dadurch gekennzeichnet, daß**
das Antriebsgehäuse (2) im wesentlichen drei zumindest teilelastische Schnappsegmente (9) aufweist, die auf der einem Spiegelglasträger (10) gegenüberliegenden Seite des Antriebsgehäuses (2) angeordnet und geeignet sind jeweils hinter den Rand einer Durchtrittsöffnung (11) des Spiegelträgers (1) einzugreifen, so daß im Eingriffszustand eine feste Verbindung zwischen dem Antriebsgehäuse (2) und dem Spiegelträger (1) durch die elastische Rückstellkraft der Schnappsegmente gewährleistet ist.

14. Rückspiegel nach einem der vorhergehenden Ansprüche,
**dadurch gekennzeichnet, daß**
das Antriebsgehäuse (2), auf welches ein Spiegelglasträger (10), eine Kraftübertragungseinrichtung (12) zwischen dem Antriebsgehäuse (2) und dem Spiegelglasträger (10) sowie ein Spiegelglas (13) fertig montiert sind, in einem einzigen Arbeitsgang mit dem Spiegelträger (1) verbindbar ist.

15. Rückspiegel nach einem der Ansprüche 11 bis 14,
**dadurch gekennzeichnet, daß**
die Ausnehmungen (7) des Antriebsgehäuses (2) zugleich als Anschraubausnehmungen (7) für eine alternative Befestigung des Antriebsgehäuses (2) an dem Spiegelträger (1) ausgebildet sind.
